# EUROPEAN PATENT APPLICATION

(11) **EP 2 565 705 A1**
(43) Date of publication of application: **06.03.2013**
(21) Application number: 11774416.9
(22) Date of filing: 29.04.2011
(51) Int. Cl.: G02F 1/13357, F21V 3/00, F21V 17/00

(54) **BACKLIGHT MODULE AND LIQUID CRYSTAL DISPLAY**

(30) Priority: 30.04.2010 CN 201010168112
(71) Applicant: Beijing Boe Optoelectronics Technology Co. Ltd., Beijing 100176 (CN)
(72) Inventor: LEE, Sangjig, Beijing 100176 (CN); LIANG, Shangrong, Beijing 100176 (CN)
(74) Representative: Klunker . Schmitt-Nilson . Hirsch
(86) International application number: PCT/CN2011/073516
(87) International publication number: WO 2011/134425

(57) **Abstract**

A backlight module (20) includes a light source (21), a reflective board (23), a light guiding plate (22) and a back board (27). The light source (21) is provided on the light entering side of the light guiding plate (22), the reflective board (23) is arranged around the outside of the light source (21), and the back board (27) is provided under the reflective board (23) and the light guiding plate (22). A first mating portion (231) is provided on the reflective board (23), and a second mating portion (271) is provided on the back board (27). The first mating portion (231) is mated with the second mating portion (271) to connect and fix the reflective board (23) to the back board (27). A liquid crystal display including the backlight module (20) is also provided. The backlight module (20) is not deformed when it is subjected to instantaneous external force, thus insuring the interior space of the reflective board (23).

## Description

### TECHNICAL FIELD

Embodiments of the present invention relate to a backlight module and a liquid-crystal display.

### BACKGROUND

Liquid crystal displays are the common flat panel displays; a backlight module is an important component part in a liquid crystal display. A light assembly as a light source in the backlight module is one important element of the backlight module.

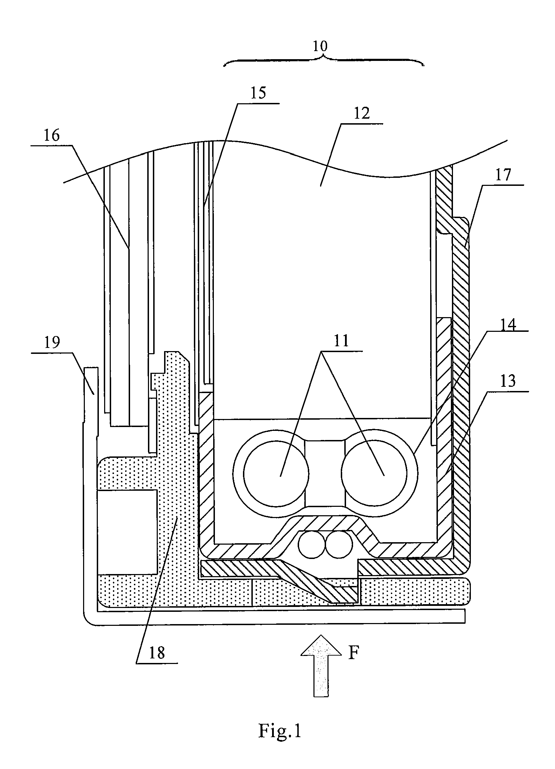

Fig. 1 is a cross-section schematic view of an existing backlight module. As shown in Fig. 1, the backlight module 10 comprises: light assemblies (typically composed of 2-3 light tubes) 11, a light guiding plate 12, and a light reflective plate 13. The light rays emitted from the light assemblies 11 are reflected to the light guiding plate 12 by the light reflective plate 13. Two light assemblies 11 are provided in a spacing element 14 to maintain the fixation of the light assemblies 11 and to provide a buffering effect; the spacing element 14 can be made of a flexible material. The backlight module 10 further comprises an optical film layer 15 provided above the light guiding plate 12 and a back plate 17 provided under the light guiding plate 12. A liquid crystal panel 16 is provided above the backlight module 10 and used for display. A back plate 17, an upper frame 18 and an outer frame 19 are provided to hold the backlight module 10 and the display panel 16. The light emitted from the light guiding plate 12 is emitted through the optical film layer 15 and the liquid crystal panel 16.

Each element of the backlight module described above is typically provided close to each other, without excessive gap therebetween. Therefore, in the process of transportation, if there is an instantaneous external force F in the arrow direction as shown in Fig. 1, the spacing element 14 between each of the light assemblies 11 and the adjacent light guiding plate 12, the upper frame 18, and the back plate 17 decreases, and the light reflective plate 13 is deformed in a direction toward the light guiding plate 12. If the light assemblies 11 are subject to press and collision, the light assemblies 11 will be damaged, causing the backlight module 10 unable to work normally. When the size of the liquid crystal display is very large, the length of the light reflective plate 13 will become longer correspondingly, and thus the deformation will occur more easily, that is, the light assemblies 11 will be damaged more easily.

In addition, as shown in Fig. 1, in the above structure, if there occurs an instantaneous external force, and the light reflective plate 13 and the back plate 17 are deformed, then the grounding end of the light reflective plate 13 is separated from the back plate 17 with grounded circuits, and the picture displayed by the liquid crystal display will have a phenomenon of instantaneous high voltage noise.

### SUMMARY

According to embodiments of the present invention, there is provided a backlight module and a liquid crystal display, so as to avoid the iground failure caused by deformation of a reflective plate and a back plate, and to induce the instantaneous high voltage noise to outside, and further to prevent the light assemblies from being damaged.

According to an embodiment of the present invention, a backlight module is provided, which comprises a light source, a reflective plate, a light guiding plate and a back plate. The light source is provided on a light entering side of the light guiding plate, the reflective plate is arranged around the periphery of the light assemblies, and the back plate is provided under the reflective plate and the light guiding plate. A first mating section is provided on the reflective plate, and a second mating section is provided on the back plate. The first mating section is mated with the second mating section to connect and fix the reflective plate to the back plate, and to induce the instantaneous high voltage noise to outside.

According to another embodiment of the present invention, a liquid crystal display is also provided, which comprises a liquid crystal panel and a backlight module provided behind the liquid crystal panel, wherein the backlight module comprises a light source, a reflective plate, a light guiding plate and a back plate. The light source is provided on a light entering side of the light guiding plate, the reflective plate is arranged around the periphery of the light source, and the back plate is provided under the reflective plate and the light guiding plate. A first mating section is provided on the reflective plate, and a second mating section is provided on the back plate. The first mating section is mated with the second mating section to connect and fix the reflective plate to the back plate.

### BRIEF DESCRIPTION OF THE DRAWINGS

Fig. 1 is a cross-section schematic view of an existing backlight module;

Fig. 2A is a cross-section schematic view of a liquid crystal display comprising a backlight module according to embodiment 1 of the present invention;

Fig. 2B is a right side view of Fig. 2A;

Fig. 3 is a structural schematic view of a liquid crystal display comprising a backlight module according to embodiment 2 of the present invention;

Fig. 4 is a structural schematic view of a liquid crystal display comprising a backlight module according to embodiment 3 of the present invention;

Fig. 5A is a structural schematic view when the light reflective plate is not assembled on the back plate in embodiment 3 of the present invention; and

Fig. 5B is a structural schematic view when the light reflective plate is assembled on the back plate in embodiment 3 of the present invention.

Reference Numbers

| | | |
|---|---|---|
| 10: backlight module | 11: light assemblies; | |
| 12: light guiding plate; | 13: light reflective plate; | |
| 14: spacer; | 15: optical film layer; | 16: liquid crystal panel; |
| 17: back plate; | 18: upper frame; | 19: outer frame; |
| 20: backlight module | | |
| 21: light assemblies; | 22: light guiding plate; | 23: light reflective plate; |
| 24: spacer; | 25: optical film layer; | 26: liquid crystal panel; |
| 27: back plate; | 28: upper frame; | 29: outer frame; |
| 231: first mating | section; 271: second mating section; | 271: second mating section; |
| 31: light assemblies; | 32: light guiding plate; | |
| 33: light reflective plate; | 34: spacer; | 37: back plate; |
| 331: first mating section; | 371: second mating section; | 41: light assemblies; |
| 42: light guiding plate; | 43: light reflective plate; | 44: spacing; |
| 47: back plate; | 431: first mating section; | 432: first bent portion; |
| 433: second bent portion; | 471: second mating section; | |
| 472: fitting hole; | 473: engagement portion. | |

### DETAILED DESCRIPTION

Next, in order to make the purposes, technical solutions and advantages of embodiments of the present invention more clear, the technical solution of the embodiments of the present invention will be described clearly and fully with reference to the accompany drawings. Obviously, the embodiments described are just some embodiments of the present invention, and not all the embodiments. Based on the embodiments in the present invention, other embodiments obtained by those of ordinary skill in the art without making creative work all belong to the technical scope of the present invention.

When the existing backlight module in transportation is subject to an instantaneous external impact force, it is intended to avoid the deformation of the reflective plate provided near the light assemblies, which causes the spacing between the reflective plate and the light guiding plate to disappear, makes the light assemblies damaged, or causes the grounding of the reflective plate to be separated from the back plate with grounded circuits and give rise to a phenomenon of instantaneous high voltage noise. According to an embodiment of the present invention, a backlight module is provided, which comprises a light source, a reflective plate, a light guiding plate and a back plate. The light assemblies of the light source are provided on the light entering side of the light guiding plate, the reflective plate is arranged around the periphery of the light assemblies, and the back plate is provided outside the reflective plate. A first mating section is provided on the reflective plate, and a second mating section is provided on the back plate. The first mating section is mated with the second mating section to connect and fix the reflective plate to the back plate. According to an embodiment of the present invention, a liquid crystal display is also provided, which comprises a liquid crystal panel and a backlight module provided behind the liquid crystal panel, wherein the backlight module adopts the structure of the embodiment of the present invention.

In the structure of the backlight module described above, on the portion of reflective plate on the lower surface the reflective plate can be attached a structure of a first mating section to mate with a structure of a second mating section on the back plate without affecting the light path. Therefore, the liquid crystal display is not deformed when subject to an instantaneous external force, which ensures the interior space of the reflective plate, prevents the light assemblies from being damaged, or prevents the separation of the reflective plate and the back plate, reinforces the stability of grounding, and can induce the instantaneous high voltage noise to outside, and thus avoiding the phenomenon of instantaneous high voltage noise caused by instable grounding.

Further, the first mating section and the second mating section are made of conductive material, which can allow a better electric connection, and can induce the instantaneous high voltage noise to be distibuted to outside, and thus avoiding the phenomenon of instantaneous high voltage noise caused by instable grounding.

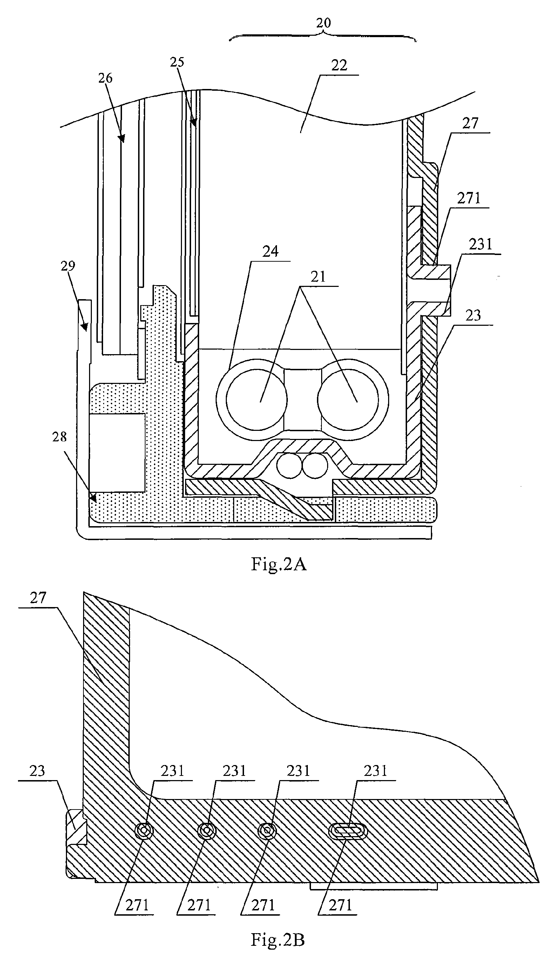

Fig. 2A is a cross-section schematic view of a liquid crystal display comprising a backlight module according to embodiment 1 of the present invention. Fig. 2B is a right side view of Fig. 2A.

As shown in Fig. 2A, the backlight module 20 comprises: light assemblies 21, a light reflective plate 23, a light guiding plate 22, and a back plate 27. The light assemblies 21 each are provided on a side as the light entering side of the light guiding plate 22, the reflective plate 23 is an example of the reflective plate in the present invention, which is arranged around the periphery of the light assemblies 21, and the back plate 27 is provided under the light reflective plate 23 and the light guiding plate 22. A first mating section 231 is provided on the light reflective plate 23, and a second mating section 271 is provided on the back plate 27. The first mating section 231 is mated with the second mating section 271 to connect and fix the light reflective plate 23 to the back plate 27. As shown in Fig. 2B, the first mating section 231 is one or more projecting rings formed in the middle portion of the light reflective plate 23 near the back plate 27. In the figures, the light assemblies 21 are for example cold cathode fluorescent lamp (CCFL) as the light source of the backlight module. However, they may be replaced by other light sources, such as light emitting diode (LED) or the like.

In a liquid crystal display comprising the backlight module 20, a liquid crystal panel 26 is provided above the backlight module 20, for displaying. An optical film layer 15 is provided above the light guiding plate 12, and comprises for example a prism film, a scattering film or the like, or a laminate thereof. A back plate 27, an upper frame 28, and an outer frame 29 are provided to fix the backlight module 20 and the display panel 26. The light emitted from the light guiding plate 22 is emitted through the optical film layer 25 and the liquid crystal panel 26.

When the liquid crystal display is subject to an instantaneous impact force, the first mating section 231 of the light reflective plate 23 is engaged with the second mating section 271 on the back plate 27, which has an effect to prevent the light reflective plate 23 from being deformed. Therefore, it is possible to prevent the light reflective plate 23 from moving in a direction toward the light guiding plate 22, and thus can ensure the spacing element 24 inside the light reflective plate 23 unchanged, and to prevent the light assemblies 21 from being damaged. Also, when the liquid crystal display is subject to an instantaneous impact force, the first mating section 231 of the light reflective plate 23 is engaged with the second mating section 271 on the back plate 27, which has also an effect to prevent the light reflective plate 23 and the back plate 27 from being separated, reinforce the stability of the grounding, and avoid the phenomenon of instantaneous high voltage noise caused by the instable grounding.

In addition, as shown in Fig. 2B, there can be provided a plurality of, for example three, first mating sections 231 on the light reflective plate 23 as needed. In this case, there should be also provided correspondingly a plurality of second mating sections 271 on the back plate 27 to match the first mating sections 231.

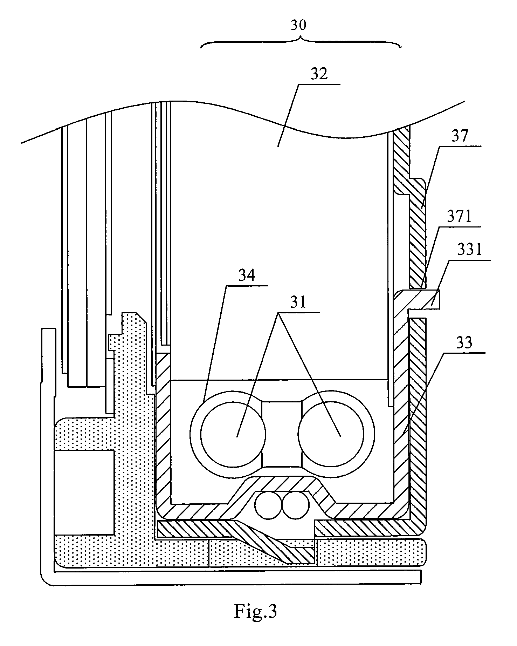

Fig. 3 is a structural schematic view of a liquid crystal display comprising a backlight module according to embodiment 2 of the present invention. As shown in Fig. 3, the backlight module 30 comprises: light assemblies 31, a light reflective plate 33, light guiding plate 32, and a back plate 37. The light assemblies 31 are provided on a side of the light guiding plate 32, the light reflective plate 33 is arranged around the periphery of the light assemblies 31, and the back plate 37 is provided under the light reflective plate 33 and the light guiding plate 32. A first mating section 331 is provided on the light reflective plate 33, and a second mating section 371 is provided on the back plate 37. The first mating section 331 is mated with the second mating section 371 to connect and fix the light reflective plate 33 to the back plate 37. The first mating section 331 is a projecting portion, and this projecting portion is formed by turning the end of the light reflective plate 33 near the back plate 37 toward the back plate 37.

Other components of the liquid crystal display comprising the backlight module 30 described above comprise an optical film layer, a liquid crystal panel, an upper frame, an outer frame, etc., which are the same as those in the embodiment 1, and thus will not be described in detail for the sake of convenience.

When the liquid crystal display is subject to an instantaneous impact force, the first mating section 331 of the light reflective plate 33 is engaged with the second mating section 371 on the back plate 37, which has an effect to prevent the light reflective plate 33 from being deformed. Therefore, it is possible to prevent the light reflective plate 33 from moving in a direction toward the light guiding plate 32, and thus can ensure the spacing 34 inside the light reflective plate 33 unchanged, and to prevent the light assemblies 31 from being damaged. Also, when the liquid crystal display is subject to an instantaneous impact force, the first mating section 331 of the light reflective plate 33 is engaged with the second mating section 371 on the back plate 37, which has also an effect to prevent the light reflective plate 33 and the back plate 37 from being separated, reinforce the stability of the grounding, and can induce the instantaneous high voltage noise to outside, to avoid the phenomenon of instantaneous high voltage noise caused by the instable grounding.

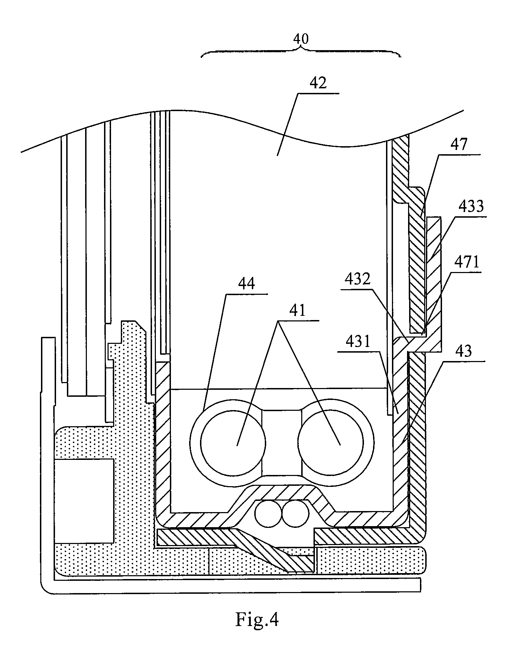

Fig. 4 is a structural schematic view of a liquid crystal display comprising a backlight module according to embodiment 3 of the present invention. As shown in Fig. 4, the backlight module 40 comprises: light assemblies 41, a light reflective plate 43, light guiding plate 42, and a back plate 47. The light assemblies 41 are provided on a side of the light guiding plate 42, the light reflective plate 43 is arranged around the periphery of the light assemblies 41, and the back plate 47 is provided under the light reflective plate 43 and the light guiding plate 42. A first mating section 431 is provided on the light reflective plate 43, and a second mating section 471 is provided on the back plate 47. The first mating section 431 is mated with the second mating section 471 to connect and fix the light reflective plate 43 to the back plate 47. The first mating section 431 is a bent plate, and this bent plate comprises a first bent portion 432 and a second bent portion 433. The first bent portion 432 is perpendicular to the back plate 47, and the second bent portion 433 is parallel to the back plate 47. One end of the first bent portion 432 is connected to the end of the light reflective plate 43 near the back plate 47, whereas the other end of the first bent portion 432 passes through the back plate 47 to connect with one end of the second bent portion 433.

Other components of the liquid crystal display comprising the backlight module 40 described above comprise an optical film layer, a liquid crystal panel, an upper frame, an outer frame, or the like structures, which are the same as those in the embodiment 1, and thus will not be described in detail for the sake of convenience.

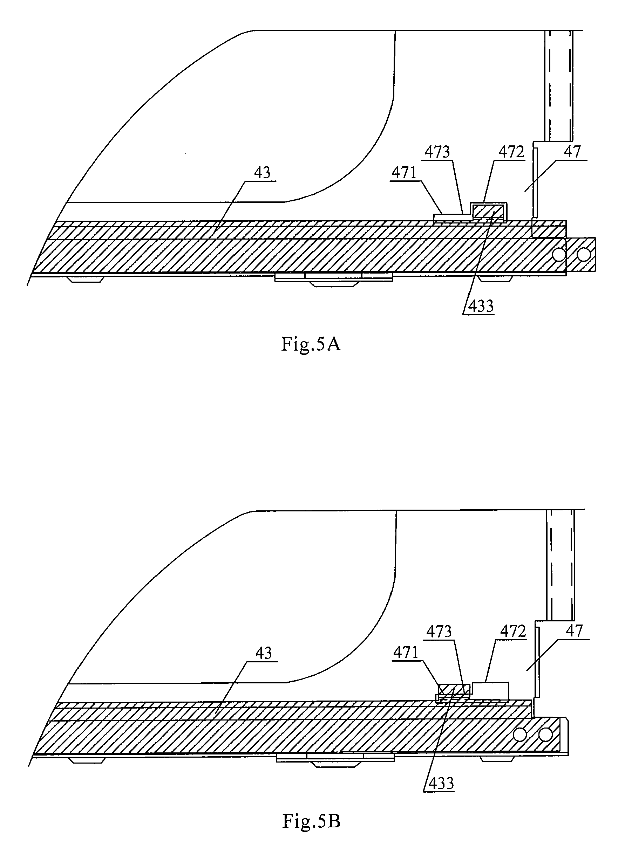

Fig. 5A is a structural schematic view when the light reflective plate is not assembled onto the back plate in embodiment 3 of the present invention, and Fig. 5B is a structural schematic view when the light reflective plate is assembled onto the back plate in embodiment 3 of the present invention. As shown in Fig. 5A and Fig. 5B, the second mating section 471 on the back plate 47 has a fitting hole 472, for accommodating the second bent portion 433, and an engagement portion 473 to engage with the first bent portion 432.

When the liquid crystal display is subject to an instantaneous impact force, the first mating section 431 of the light reflective plate 43 is engaged with the second mating section 471 on the back plate 47, which has an effect to prevent the light reflective plate 43 from being deformed. Therefore, it is possible to prevent the light reflective plate 43 from moving in a direction toward the light guiding plate 42, and thus can ensure the spacing 44 inside the light reflective plate 43 unchanged, and to prevent the light assemblies 41 from being damaged. Also, when the liquid crystal display is subject to an instantaneous impact force, the first mating section 431 of the light reflective plate 43 is engaged with the second mating section 471 on the back plate 47, which has also an effect to prevent the light reflective plate 43 and the back plate 47 from being separated, reinforce the stability of the grounding, and avoid the phenomenon of instantaneous high voltage noise caused by the instable grounding.

Although a case in which the light assemblies used as light source is provided on a side of the light guiding plate (side-irradiating type) is taken as an example to illustrate in the above-described embodiments, the light source (such as CCFL or LED) can be provided under the light guiding plate (right-under type), in which case the structure of the embodiments of the present invention also applies, wherein the reflective plate is provided under the light source or on a side, the back plate is provided under the light reflective plate and the light guiding plate; a first mating section is provided on the light reflective plate, a second mating section is provided on the back plate, and the first mating section and the second mating section are mated with each other to connect and fix the light reflective plate to the back plate.

Lastly, it should be noted that: the embodiments above are only used to illustrate the technical solutions of the present invention, and not to limit them. Although the present invention is described in detail with reference to the above described embodiments, those with ordinary skill in the art should appreciate that: the technical solutions described in each of the above embodiments can be modified, or a part of the technical features of them can be replaced equivalently, without departing form the spirit and scope of the technical solutions in the embodiments.

## Claims

1. A backlight module, comprising:
a light source;
a reflective plate;
a light guiding plate; and
a back plate,
wherein the light source is provided on a light entering side of the light guiding plate, the reflective plate is arranged around the periphery of the light source, and the back plate is provided under the reflective plate and the light guiding plate; and
wherein a first mating section is provided on the reflective plate, a second mating section is provided on the back plate, and the first mating section are mated with the second mating section to connect and fix the reflective plate to the back plate.

2. The backlight module according to claim 1, wherein the first mating section and the second mating section are made of a conductive material.

3. The backlight module according to claim 1, wherein the first mating section is one or more projecting rings formed in a middle portion of the reflective plate near the back plate.

4. The backlight module according to claim 1, wherein the first mating section is a projecting portion, and the projecting portion is formed by turning an end of the reflective plate near the back plate toward the back plate.

5. The backlight module according to claim 1, wherein the first mating section is a bent plate, in which the bent plate comprises a first bent portion and a second bent portion,
the first bent portion is perpendicular to the back plate, the second bent portion is parallel to the back plate, and one end of the first bent portion is connected to an end of the reflective plate near the back plate, whereas the other end of the first bent portion passes through the back plate to connect with one end of the second bent portion.

6. A liquid crystal display comprising a liquid crystal panel and a backlight module provided behind the liquid crystal panel, wherein the backlight module comprises:
a light source;
a reflective plate;
a light guiding plate; and
a back plate, wherein the light source is provided on a light entering side of the light guiding plate, the reflective plate is arranged around the periphery of the light source, and the back plate is provided outside the reflective plate, and wherein a first mating section is provided on the reflective plate, a second mating section is provided on the back plate, and the first mating section are mated with the second mating section to connect and fix the reflective plate to the back plate.

7. The liquid crystal display according to claim 6, wherein the first mating section is one or more projecting rings formed in a middle portion of the reflective plate.

8. The liquid crystal display according to claim 6, wherein the first mating section is a projecting portion, and the projecting portion is formed by turning an end of the reflective plate near the back plate toward the back plate.

9. The liquid crystal display according to claim 6, wherein the first mating section is a bent plate, in which the bent plate comprises a first bent portion and a second bent portion,
the first bent portion is perpendicular to the back plate, the second bent portion is parallel to the back plate, and one end of the first bent portion is connected to an end of the reflective plate near the back plate, whereas the other end of the first bent portion passes through the back plate to connect with one end of the second bent portion.
